# EUROPÄISCHE PATENTSCHRIFT

(11) **EP 2 647 795 B1**
(45) Veröffentlichungstag und Bekanntmachung des Hinweises auf die Patenterteilung: **07.11.2018**
(21) Anmeldenummer: 12163064.4
(22) Anmeldetag: 04.04.2012
(51) Int. Cl.: F01D 5/20, F01D 5/22, F01D 11/08, F01D 11/12

(54) **Dichtungssystem für eine Strömungsmaschine**
Seal system for a turbo engine
Système d'étanchéité pour turbomachine

(43) Veröffentlichungstag der Anmeldung: 09.10.2013
(73) Patentinhaber: MTU Aero Engines AG, 80995 München (DE)
(72) Erfinder: Mahle, Inga Dr., 81669 München (DE); Böck, Alexander, 82288 Kottgeisering (DE)

(56) Entgegenhaltungen:
- EP-A1- 1 152 124
- EP-A2- 2 302 169
- WO-A1-99/37888
- WO-A2-2011/054341
- DE-A1- 10 140 742
- DE-A1-102009 003 423
- GB-A- 2 242 709
- US-A- 4 863 538
- US-A1- 2009 142 187

## Beschreibung

Die Erfindung betrifft ein Dichtungssystem für eine Strömungsmaschine, insbesondere für eine Gasturbine, wobei das Dichtungssystem in einem Ringraum zwischen einer strömungsbegrenzenden Wand der Strömungsmaschine und mindestens einer Laufschaufelspitze einer Laufschaufel oder einem an der Laufschaufelspitze angeordneten äußeren Deckband ausgebildet ist und mindestens eine Dichtstelle umfasst.

Derartige Dichtungssysteme kommen insbesondere bei so genannten Spalterhaltungssystemen in den Verdichter- und Turbinenkomponenten zur Anwendung. Dabei haben derartige Dichtungssysteme die Aufgabe, einen Dichtspalt von rotierender Beschaufelung zu einem Gehäuse als auch die Spalte von einer stehenden Beschaufelung zu den drehenden Rotomaben minimal zu halten und damit ein stabiles Betriebsverhalten bei hohem Wirkungsgrad zu garantieren. Üblicherweise weisen die rotierenden Bauteile der Turbine Dichtfinnen bzw. Dichtspitzen auf, die in bekannter Weise gegen wabenförmige Dichtungen streifen bzw. einlaufen. Die Dichtungen sind dabei als Anstreif- und Einlaufbeläge ausgebildet. Entsprechende Dichtungssysteme sind zum Beispiel aus der US 4,856,963 B1 und der DE 198 07 247 A1 bekannt. Komplexe Anstreif- bzw. Einlaufstrukturen werden herkömmlich in die statischen Bereiche der Verdichter- und Turbinenkomponenten gelegt. Aus aerodynamischer Sicht kann diese Bauweise aber deutliche Nachteile aufweisen, wodurch sich der Wirkungsgrad der Strömungsmaschine deutlich verschlechtert.

Aus der EP 1 152 124 A1 ist eine Anordnung für eine Strömungsmaschine zur Spaltdichtung zwischen einem beweglichen und einem ruhenden Bauteil bekannt.

Aus der US 2009/142187 A1 ist eine Dichtungsstruktur für eine Dampfturbine bekannt.

Aus der EP 2 302 169 A2 ist eine Spaltregelung für eine Stufe einer Niederdruck-Dampfmaschine bekannt.

Aus der DE 10 2009 003423 A1 ist eine Dichtungsanordnung zum Abdichten des Abstands zwischen einem rotierenden und einem feststehenden Element bekannt.

Aus der WO 2011/054341 A2 ist eine Anordnung für eine Gasturbine mit Dichtelement bekannt.

Aus der GB 2 242 709 A ist eine Dichtanordnung für Schaufelspitzen in Turbinentriebwerken mit entgegengesetzt laufenden Rotoren bekannt.

Aus der WO 99/37888 A1 ist eine Anordnung für Gasturbinentriebwerke mit Ringen für die Schaufelspitzen sowie Verfahren für diese Anordnungen bekannt.

Aus der DE 101 40 742 A1 ist eine Vorrichtung zur Dichtspaltreduzierung zwischen einer rotierenden und einer stationären Komponente innerhalb einer axial durchströmten Strömungsrotationsmaschine bekannt.

Aufgabe der vorliegenden Erfindung ist es daher, ein Dichtungssystem der eingangs genannten Art zu schaffen, welches eine aerodynamisch vorteilhaftere Anordnung und Ausgestaltung des Dichtungssystems und damit eine Steigerung des Wirkungsgrads einer Strömungsmaschine gewährleistet.

Die Aufgaben werden erfindungsgemäß durch ein Dichtungssystem mit den Merkmalen des Patentanspruchs 1 gelöst. Vorteilhafte Ausgestaltungen der Erfindung sind in den jeweiligen Unteransprüchen angegeben.

Ein erfindungsgemäßes Dichtungssystem für eine Strömungsmaschine, insbesondere für eine Gasturbine, ist in einem Ringraum zwischen einer strömungsbegrenzenden Wand der Strömungsmaschine und mindestens einer Laufschaufelspitze einer Laufschaufel oder einem an der Laufschaufelspitze angeordneten äußeren Deckband ausgebildet. Dabei umfasst das Dichtungssystem mindestens eine Dichtstelle, wobei die Dichtstelle mindestens einen an der Laufschaufelspitze oder dem äußeren Deckband in Richtung der strömungsbegrenzenden Wand der Strömungsmaschine angeordneten Einlaufbelag aufweist. Bei der strömungsbegrenzenden Wand kann es sich um ein Gehäuse der Strömungsmaschine handeln. Des Weiteren ist es möglich, dass das Dichtungssytem mindestens eine dem Einlaufbelag gegenüberliegende und an einer Innenseite der Wand angeordnete Dichtspitze umfasst. Durch das erfindungsgemäße Dichtungssystem ist es möglich, die Aerodynamik der Strömungsmaschine im Bereich der Dichtstelle zu optimieren, insbesondere da erfindungsgemäß der mindestens eine Einlaufbelag mit der Laufschaufel rotiert und die mindestens eine dem rotierenden Einlaufbelag gegenüberliegende und damit in Wirkverbindung stehende Dichtspitze oder Gehäusewand, wobei die Dichtspitze statisch am Gehäuseteil der Strömungsmaschine, insbesondere an der Innenseite einer strömungsbegrenzenden Wand, fixiert ist und die Gehäusewand zum Beispiel eine Innenwand eines Verdichtergehäuses ist. Aufgrund der genannten aerodynamischen Optimierung ergibt sich eine Steigerung des Wirkungsgrads einer Strömungsmaschine. Die Laufschaufel kann dabei Teil einer Laufschaufelreihe umfassend mehrere Laufschaufeln sein.

Erfindungsgemäß wird der mindestens eine Einlaufbelag mittels eines generativen Herstellungsverfahrens, wie z.B. selektives Laserschmelzen oder selektives Lasersintern direkt auf der Laufschaufelspitze oder dem äußeren Deckband der Laufschaufel aufgebracht. Das generative Herstellverfahren kann vorteilhafterweise den jeweiligen Anforderungen an die Strömungsmaschine angepasst werden.

In weiteren vorteilhaften Ausgestaltungen des erfmdungsgemäßen Dichtungssystems umfasst dieses mindestens zwei Dichtstellen, wobei die Dichtstellen aus jeweils einem an der Laufschaufelspitze oder dem äußeren Deckband angeordneten Einlaufbelag und aus jeweils mindestens einer dem jeweiligen Einlaufbelag gegenüberliegender und an der Innenseite der Wand angeordneter Dichtspitze besteht. Dabei sind die Einlaufbeläge in Strömungsrichtung hintereinander angeordnet. Es ist aber auch möglich, dass das Dichtungssystem wiederum mindestens zwei Dichtstellen aufweist, wobei die erste Dichtstelle eine an der Laufschaufelspitze oder dem äußeren Deckband angeordnete Dichtspitze umfasst, wobei diese Dichtspitze einem an einer Innenseite der strömungsbegrenzenden Wand angeordneten Einlaufbelag gegenüberliegend angeordnet ist, und die zweite Dichtstelle den an der Laufschaufelspitze oder dem äußeren Deckband angeordneten Einlaufbelag sowie die an der Innenseite der Wand und dem Einlaufbelag gegenüberliegend angeordnete Dichtspitze umfasst. Das erfindungsgemäße Dichtungssytem kann den jeweiligen Anforderungen an die Strömungsmaschine vorteilhafterweise angepasst werden um letztendlich eine Steigerung des Wirkungsgrads zu erzielen.

In weiteren vorteilhaften Ausgestaltungen des erfmdungsgemäßen Dichtungssystems können die Dichtspitzen einstückig mit dem Deckband und/oder der strömungsbegrenzenden Wand ausgebildet sein. Dadurch ergeben sich fertigungstechnische Vorteile, die insgesamt zu einer Kostenreduzierung bei der Herstellung des Dichtungssystems führen.

In weiteren vorteilhaften Ausgestaltungen des erfindungsgemäßen Dichtungssystems, welche nicht als Erfindung beansprucht werden, kann der mindestens eine Einlaufbelag mittels mechanischer Befestigungsmittel, mittels Löten oder mittels Schweißen oder Laserschweißen an der Laufschaufelspitze oder dem äußeren Deckband der Laufschaufel befestigt werden. Es ist aber auch möglich, wenn auch nicht erfindungsgemäss, dass der mindestens eine Einlaufbelag mittels eines thermischen Spritzverfahrens, wie z.B. Flammspritzen, Hochgeschwindigkeits-Flammspritzen, Plasmaspritzen oder kinetisches Kaltgas-Kompaktieren direkt auf der Laufschaufelspitze oder dem äußeren Deckband der Laufschaufel aufgebracht wird. Die verwendeten Herstellverfahren bzw. Befestigungsverfahren können wiederum vorteilhafterweise den jeweiligen Anforderungen an die Strömungsmaschine angepasst werden.

In einer weiteren vorteilhaften Ausgestaltung des erfindungsgemäßen Dichtungssystems ist das Dichtungssystem als Stufenlabyrinth ausgebildet. Dadurch kann das Dichtungssystem vorteilhafterweise auf die entsprechenden Gegebenheiten der Strömungsmaschine angepasst werden, insbesondere an die vorhandenen Gegebenheiten in einer Niederdruckgasturbine.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen.

Dabei zeigen
Figur 1 eine abschnittsweise, schematische und teilweise geschnittene Ansicht eines erfindungsgemäßen Dichtungssystems gemäß einer ersten Ausführungsform; und
Figur 2 eine abschnittsweise, schematische und teilweise geschnittene Ansicht eines erfindungsgemäßen Dichtungssystems gemäß einer zweiten Ausführungsform.

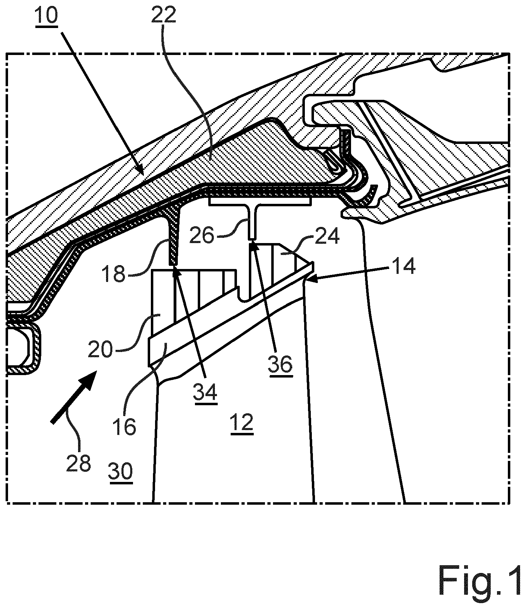

Das in Figur 1 dargestellte Dichtungssystem 10 ist Bestandteil einer Niederdruckgasturbine. Man erkennt, dass das Dichtungssystem 10 in einem Ringraum 30 zwischen einer strömungsbegrenzenden Wand 22 der Niederdruckgasturbine und einer Laufschaufelreihe umfassend mehrere Laufschaufeln 12 bzw, einem an einer Laufschaufelspitze 14 angeordneten äußeren Deckband 16 angeordnet ist. Das Dichtungssystem 10 umfasst dabei zwei Dichtstellen 34, 36, wobei die zweite Dichtstelle 36 in Strömungsrichtung 28 hinter der ersten Dichtstelle 34 angeordnet ist. Die Dichtstellen 34, 36 bestehen dabei aus jeweils einem an dem äußeren Deckband 16 angeordneten Einlaufbeläge 20, 24 und aus jeweils einer dem jeweiligen Einlaufbelag 20, 24 gegenüberliegender und an der Innenseite der Wand 22 angeordneter Dichtspitze 18, 26. Zudem sind die Einlaufbeläge 20, 24 in Strömungsrichtung 28 hintereinander angeordnet. Die Einlaufbeläge 20, 24 können in üblicher Weise ausgebildet sein. In dem dargestellten Ausführungsbeispiel weisen sie eine Wabenstruktur auf. Die Einlaufbeläge 20, 24 können mittels mechanischer Befestigungsmittel, mittels Löten oder mittels Schweißen oder Laserschweißen an dem äußeren Deckband 16 der Laufschaufel 12 befestigt werden. Erfindungsgemäss wird der mindestens eine Einlaufbelag mittels eines generativen Herstellungsverfahrens, wie z.B. selektives Laserschmelzen oder selektives Lasersintern direkt auf der Laufschaufelspitze oder dem äusseren Deckband der Laufschaufel aufgebracht. Es ist aber auch möglich, was aber nicht erfindungsgemäss ist, dass die Einlaufbeläge 20, 24 mittels eines thermischen Spritzverfahrens direkt auf der Laufschaufelspitze 14 oder dem äußeren Deckband 16 der Laufschaufel 12 aufgebracht werden. Insbesondere können hierbei Pulverspritzgießverfahren zur Anwendung kommen. Es ist aber auch möglich, die Einlaufbeläge 20, 24 als Komplettsystem mit den genannten Bereichen bereitzustellen. In dem dargestellten Beispiel sind die Einlaufbeläge 20, 24 mittels eines kinetischen Kaltgas-Kompaktierverfahrens (K3) auf das äußere Deckband 16 aufgebracht. Die Einlaufbeläge 20, 24 sowie die Dichtspitzen 18, 26 des Dichtungssystems 10 können aus üblicherweise verwendeten Materialien bestehen. Hierzu ist eine Vielzahl von Materialien bekannt.

Des Weiteren erkennt man, dass das dargestellte Dichtungssystem 10 als Stufenlabyrinth ausgebildet ist.

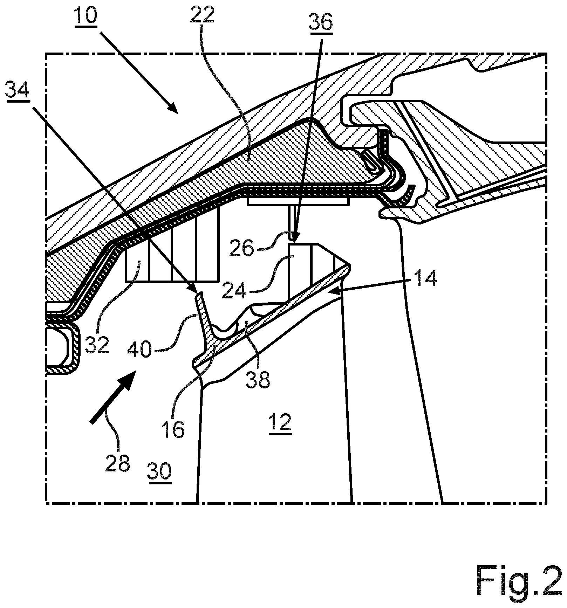

Figur 2 zeigt eine abschnittsweise, schematische und teilweise geschnittene Ansicht eines Dichtungssystems 10 gemäß einer zweiten Ausführungsform. Man erkennt, dass das Dichtungssystem 10 wiederum in dem Ringraum 30 zwischen der strömungsbegrenzenden Wand 22 einer Niederdruckgasturbine und einer Laufschaufelreihe umfassend mehrere Laufschaufeln 12 bzw. dem an der Laufschaufelspitze 14 angeordneten äußeren Deckband 16 angeordnet ist. Das Dichtungssystem 10 umfasst auch bei diesem Ausführungsbeispiel zwei Dichtstellen 34, 36, wobei die zweite Dichtstelle 36 in Strömungsrichtung 28 hinter der ersten Dichtstelle 34 angeordnet ist. Im Gegensatz zu dem in Figur 1 dargestellten ersten Ausführungsform des Dichtungssystems umfasst die erste Dichtstelle 34 eine an dem äußeren Deckband 16 angeordnete Dichtspitze 40, wobei die Dichtspitze 40 einem an einer Innenseite der strömungsbegrenzenden Wand 22 angeordneten Einlaufbelag 32 gegenüberliegend angeordnet ist. Die zweite Dichtstelle 36 weist den an dem äußeren Deckband 16 angeordneten Einlaufbelag 24 sowie die an der Innenseite der Wand 22 und dem Einlaufbelag 24 gegenüberliegend angeordnete Dichtspitze 26 auf. In dem dargestellten Ausführungsbeispiel ist der Einlaufbelag 24 in Strömungsrichtung 28 hinter der Dichtspitze 40 jeweils an dem äußeren Deckband 16 angeordnet. Es ist aber auch möglich, dass der Einlaufbelag 24 in Strömungsrichtung 28 vor der Dichtspitze 40 angeordnet ist. Die entsprechende, an der Innenseite der Wand 22 ausgebildete Dichtspitze 26 und der Einlaufbelag 32 sind dann ebenfalls in gegenüber dem in Figur 2 dargestellten Ausfühungsbeispiel umgekehrter Reihenfolge angeordnet.

Des Weiteren erkennt man, dass der Einlaufbelag 24 in Strömungsrichtung 28 axial hinter einer durch eine Z-Verklinkung der Deckbänder 16 entstandenen Versteifungsrippe 38 angeordnet ist. Auch dass in Figur 2 dargestellte Dichtungssystem 10 ist als Stufenlabyrinth ausgebildet.

Die in den Ausführungsbeispielen dargestellten Dichtungssysteme sind nicht auf den Niederdruckgasturbinenbereich beschränkt. Sie kommen auch im Verdichter der Gasturbine zum Einsatz. Insbesondere ist in diesem Fall der Einlaufbelag an der Laufschaufelspitze einer Laufschaufel des Verdichters angeordnet.

## Patentansprüche

1. Dichtungssystem für eine Strömungsmaschine, insbesondere für eine Gasturbine, umfassend eine strömungsbegrenzende Wand (22) und eine Laufschaufelreihe, wobei das Dichtungssystem (10) in einem Ringraum (30) zwischen einer strömungsbegrenzenden Wand (22) der Strömungsmaschine und mindestens einer Laufschaufelspitze (14) einer Laufschaufel (12) oder einem an der Laufschaufelspitze (14) angeordneten äußeren Deckband (16) ausgebildet ist und mindestens eine Dichtstelle (34, 36) umfasst, wobei die Dichtstelle (34, 36) mindestens einen an der Laufschaufelspitze (14) oder dem äußeren Deckband (16) in Richtung der strömungsbegrenzenden Wand (22) der Strömungsmaschine angeordneten Einlaufbelag (20, 24) aufweist, **dadurch gekennzeichnet, dass** der mindestens eine Einlaufbelag (20, 24) mittels eines generativen Herstellungsverfahren direkt auf der Laufschaufelspitze (14) oder dem äußeren Deckband (16) der Laufschaufel (12) aufgebracht ist.

2. Dichtungssystem nach Anspruch 1, **dadurch gekennzeichnet, dass** die mindestens eine Dichtstelle (34, 36) mindestens eine dem Einlaufbelag (20, 24) gegenüberliegende und an einer Innenseite der Wand (22) angeordnete Dichtspitze (18, 26) aufweist.

3. Dichtungssystem nach Anspruch 1 oder 2, **dadurch gekennzeichnet, dass** das Dichtungssystem (10) mindestens zwei Dichtstellen (34, 36) umfasst, wobei die Dichtstellen (34, 36) aus jeweils einem an der Laufschaufelspitze (14) oder dem äußeren Deckband (16) angeordneten Einlaufbelag (20, 24) und aus jeweils mindestens einer dem jeweiligen Einlaufbelag (20, 24) gegenüberliegender und an der Innenseite der Wand (22) angeordneter Dichtspitze (18, 26) besteht und die Einlaufbeläge (20, 24) in Strömungsrichtung (28) hintereinander angeordnet sind.

4. Dichtungssystem nach Anspruch 2, **dadurch gekennzeichnet, dass** das Dichtungssystem (10) mindestens zwei Dichtstellen (34, 36) aufweist, wobei die erste Dichtstelle (34) eine an der Laufschaufelspitze (14) oder dem äußeren Deckband (16) angeordnete Dichtspitze (40) umfasst, wobei die Dichtspitze (40) einem an einer Innenseite der strömungsbegrenzenden Wand (22) angeordneten Einlaufbelag (32) gegenüberliegend angeordnet ist, und die zweite Dichtstelle (36) den an der Laufschaufelspitze (14) oder dem äußeren Deckband (16) angeordneten Einlaufbelag (24) sowie die an der Innenseite der Wand (22) und dein Einlaufbelag (24) gegenüberliegend angeordnete Dichtspitze (26) umfasst.

5. Dichtungssystem nach einem der vorhergehenden Ansprüche, **dadurch gekennzeichnet, dass** die Laufschaufel (12) Teil einer Laufschaufelreihe umfassend mehrere Laufschaufeln ist.

6. Dichtungssystem nach einem der Ansprüche 1 bis 3, **dadurch gekennzeichnet, dass** die Dichtspitze (18, 26) einstückig mit der strömungsbegrenzenden Wand (22) ausgebildet ist.

7. Dichtungssystem nach einem der vorhergehenden Ansprüche, **dadurch gekennzeichnet, dass** das Dichtungssystem (10) als Stufenlabyrinth ausgebildet ist.

## Claims

1. Sealing system for a turbomachine, in particular for a gas turbine, comprising a flow-restricting wall (22) and a row of rotor blades, the sealing system (10) being formed in an annular gap (30) between a flow-restricting wall (22) of the turbomachine and at least one rotor blade tip (14) of a rotor blade (12) or an outer shroud (16) arranged on the rotor blade tip (14) and comprising at least one sealing point (34, 36), the sealing point (34, 36) having at least one abradable coating (20, 24) arranged on the rotor blade tip (14) or the outer shroud (16) in the direction of the flow-restricting wall (22) of the turbomachine, **characterized in that** the at least one abradable coating (20, 24) is applied directly to the rotor blade tip (14) or the outer shroud (16) of the rotor blade (12) by means of a generative production method.

2. Sealing system according to claim 1, **characterized in that** the at least one sealing point (34, 36) has at least one sealing tip (18, 26) arranged opposite the abradable coating (20, 24) and on the inner side of the wall (22).

3. Sealing system according to either claim 1 or claim 2, **characterized in that** the sealing system (10) comprises at least two sealing points (34, 36), the sealing points (34, 36) each consisting of an abradable coating (20, 24) arranged on the rotor blade tip (14) or the outer shroud (16) and of at least one sealing tip (18, 26) arranged opposite the relevant abradable coating (20, 24) and on the inner side of the wall (22) and the abradable coatings (20, 24) being arranged one behind the other in the flow direction (28).

4. Sealing system according to claim 2, **characterized in that** the sealing system (10) has at least two sealing points (34, 36), the first sealing point (34) comprising a sealing tip (40) arranged on the rotor blade tip (14) or the outer shroud (16), the sealing tip (40) being arranged opposite an abradable coating (32) arranged on an inner side of the flow-restricting wall (22), and the second sealing point (36) comprising the abradable coating (24) arranged on the rotor blade tip (14) or the outer shroud (16) and the sealing tip (26) arranged on the inner side of the wall (22) and opposite the abradable coating (24).

5. Sealing system according to any of the preceding claims, **characterized in that** the rotor blade (12) is part of a row of rotor blades comprising a plurality of rotor blades.

6. Sealing system according to any of claims 1 to 3, **characterized in that** the sealing tip (18, 26) is integral with the flow-restricting wall (22).

7. Sealing system according to any of the preceding claims, **characterized in that** the sealing system (10) is designed as a stepped labyrinth.

## Revendications

1. Système d'étanchéité pour une turbomachine, en particulier pour une turbine à gaz, comprenant une paroi de limitation d'écoulement (22) et une rangée d'aubes mobiles, le système d'étanchéité (10) étant formé dans un espace annulaire (30) entre la paroi de limitation d'écoulement (22) de la turbomachine et au moins une extrémité d'aube (14) d'une aube mobile (12) ou un bandage (16) externe disposé sur l'extrémité d'aube (14) et comprenant au moins un point d'étanchéité (34, 36), le point d'étanchéité (34, 36) comprenant au moins un revêtement de rodage (20, 24) s'étendant le long de l'extrémité d'aube (14) ou du bandage externe (16) en direction de la paroi de limitation d'écoulement (22) de la turbomachine, **caractérisé en ce qu'**au moins un revêtement de rodage (20, 24) est appliqué directement sur l'extrémité d'aube (14) ou le bandage externe (16) de l'aube mobile (12) au moyen d'un procédé de production reproductif.

2. Système d'étanchéité selon la revendication 1, **caractérisé en ce que** l'au moins un point d'étanchéité (34, 36) comprend au moins une pointe de joint (18, 26) disposée à l'opposé du revêtement de rodage (20, 24) et sur une face intérieure de la paroi (22).

3. Système d'étanchéité selon la revendication 1 ou 2, **caractérisé en ce que** le système d'étanchéité (10) comprend au moins deux points d'étanchéité (34, 36), les points d'étanchéité (34, 36) se composant respectivement d'un revêtement de rodage (20, 24) disposé sur l'extrémité d'aube (14) ou le bandage externe (16) et de respectivement au moins une pointe de joint (18, 26) disposée à l'opposé du revêtement de rodage (20, 24) respectif et sur la face intérieure de la paroi (22), et que les revêtements de rodage (20, 24) sont disposés l'un après l'autre dans la direction d'écoulement (28).

4. Système d'étanchéité selon la revendication 2, **caractérisé en ce que** le système d'étanchéité (10) comprend au moins deux points d'étanchéité (34, 36), le premier point d'étanchéité (34) comprenant une pointe de joint (40) disposée sur l'extrémité d'aube (14) ou sur le bandage externe (16), la pointe de joint (40) étant disposée à l'opposé d'un revêtement de rodage (32) disposé sur la face intérieure de la paroi de limitation d'écoulement (22), et le deuxième point d'étanchéité (36) comprenant le revêtement de rodage (24) disposé sur l'extrémité d'aube (14) ou le bandage externe (16) et la pointe de joint (26) disposée sur la face intérieure de la paroi (22) et à l'opposé du revêtement de rodage (24).

5. Système d'étanchéité selon l'une quelconque des revendications précédentes, **caractérisé en ce que** l'aube mobile (12) fait partie d'une rangée d'aubes mobiles comprenant plusieurs aubes mobiles.

6. Système d'étanchéité selon l'une quelconque des revendications 1 à 3, **caractérisé en ce que** la pointe de joint (18, 26) est formée d'une pièce avec la paroi de limitation d'écoulement (22).

7. Système d'étanchéité selon l'une quelconque des revendications précédentes, **caractérisé en ce que** le système d'étanchéité (10) est formé comme un labyrinthe étagé.
